(19) Europäisches Patentamt
European Patent Office
Office européen des brevets

(11) Numéro de publication: 0 503 989 B1

# (12) FASCICULE DE BREVET EUROPEEN

(45) Date de publication de fascicule du brevet: **17.05.95**

(51) Int. Cl.$^{6}$: **A01N 25/04**, A01N 25/30

(21) Numéro de dépôt: **92400401.3**

(22) Date de dépôt: **14.02.92**

(54) **Suspo-émulsions phytosanitaires.**

(30) Priorité: **06.03.91 FR 9102877**

(43) Date de publication de la demande:
**16.09.92 Bulletin 92/38**

(45) Mention de la délivrance du brevet:
**17.05.95 Bulletin 95/20**

(84) Etats contractants désignés:
**AT BE CH DE DK ES FR GB GR IT LI LU NL PT SE**

(56) Documents cités:
**EP-A- 0 091 331**
**EP-A- 0 261 492**
**EP-A- 0 347 225**
**DE-A- 2 241 667**
**GB-A- 2 123 294**

**PESTICIDE SCIENCE vol. 29, no. 4, Août 1990, BARKING, GB pages 451 - 465; P.J.MULOUEEN ET AL.: 'Recent Development in Suspoemulsions'**

**CHEMICAL PATENTS INDEX, BASIC ABSTRACTS JOURNAL Week 37, 4 Novembre 1981 Derwent Publications Ltd., London, GB; AN 66756D/37**

(73) Titulaire: **RHONE-POULENC CHIMIE**
**25, Ouai Paul Doumer**
**F-92408 Courbevoie Cédex (FR)**

(72) Inventeur: **Thiard, Jean-François**
**14, rue Guillaume Bertrand**
**F-75011 Paris (FR)**

(74) Mandataire: **Seugnet, Jean Louis et al**
**RHONE-POULENC CHIMIE,**
**Direction de la Propriété Industrielle,**
**25, Ouai Paul Doumer**
**F-92408 Courbevoie Cédex (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne de nouvelles suspo-émulsions phytosanitaires.

Les matières actives phytosanitaires, telles que les insecticides, les germicides, les herbicides, les fongicides, les acaricides, les nématicides, les molluscicides, les rodenticides, les attractifs, les répulsifs, les associations de plusieurs de ces composés, sont généralement insolubles dans l'eau.

Elles peuvent être mises en oeuvre habituellement sous forme de solutions dans des solvants organiques, ces solutions étant ensuite émulsionnées dans l'eau, lors de leur utilisation.

L'emploi de solvants, tels que les xylènes ou le kérosène, pose d'évidents problèmes de pollution de l'environnement.

Un autre mode de préparation des compositions de matières actives consiste en des dispersions aqueuses fluides appelées couramment "flowable" qui sont diluées lors de leur application.

Ces dispersions aqueuses contiennent un ou plusieurs tensio-actifs.

La prise en compte de plus en plus sérieuse des différents problèmes de pollution de l'environnement, conduit à la recherche de compositions phytosanitaires de moins en moins toxiques.

La présente invention contribue à cette évolution par l'utilisation d'un système tensio-actif constitué au moins en partie de composés non-toxiques, non-irritants et biodégradables.

Le caractère émulsifiant et dispersant des sucroglycérides est connu, pour préparer des systèmes dispersés aqueux de matières grasses.

Les sucroglycérides sont des mélanges de produits, obtenus par transestérification de triglycérides, naturels ou de synthèse, avec le saccharose. Ces mélanges contiennent des monoglycérides, des diglycérides, de faibles quantités de triglycérides non transestérifiés, des monoesters et diesters du saccharose.

Le brevet EP-A-0 091 331, qui décrit un procédé de préparation de sucroglycérides fluides, indique également que lesdits sucroglycérides ont des propriétés tensio-actives, qui peuvent être utilisées notamment pour la préparation d'émulsions d'huiles essentielles ou de lait maigre réengraissé. Aux sucroglycérides peuvent également être associées des lécithines et des huiles fluides.

Le brevet CH 423.442 décrit un procédé de préparation d'émulsions d'huiles ou de corps gras solides dans l'eau, utilisant comme système émulsifiant des sucroglycérides et une lécithine.

La présente invention consiste à utiliser ce pouvoir émulsifiant et/ou dispersant des sucroglycérides pour l'obtention de suspo-émulsions de matières actives phytosanitaires, ainsi que la capacité des sucroglycérides à modifier la bio-disponibilité des matières actives.

Plus précisément, l'invention consiste en une suspo-émulsion aqueuse de matière active phytosanitaire solide, de point de fusion supérieur ou égal à 45 °C, sensiblement insoluble dans l'eau, caractérisée en ce qu'elle comporte au moins des sucroglycérides, ladite matière active et, soit un tensio-actif non-ionique et/ou anionique, soit un système tensio-actif comprenant des sucroglycérides, un triglycéride alcoxylé et/ou un acide gras alcoxylé et/ou un ester de sorbitan et/ou un ester de sorbitan alcoxylé, et de l'eau.

La suspo-émulsion selon l'invention peut être obtenue en mélangeant les différents composés qui la constituent.

Cependant afin de mieux ajuster les propriétés souhaitées, c'est-à-dire notamment la taille des particules en émulsion et la taille des particules en suspension, la suspo-émulsion sera de préférence préparée à partir d'une suspension aqueuse de la matière active et d'une émulsion aqueuse à base de sucroglycérides.

De préférence, l'invention consiste donc en une suspo-émulsion de matière active phytosanitaire solide, de point de fusion supérieur ou égal à 45 °C, sensiblement insoluble dans l'eau, caractérisée en ce qu'elle est obtenue par mélangeage :

- d'une émulsion aqueuse comprenant au moins des sucroglycérides,
- avec une suspension aqueuse de ladite matière active, comprenant, soit un tensio-actif non-ionique et/ou anionique, soit un système tensio-actif comprenant des sucroglycérides, un triglycéride alcoxylé et/ou un acide gras alcoxylé et/ou un ester de sorbitan et/ou un ester de sorbitan alcoxylé.

La suspension aqueuse, servant à préparer la suspo-émulsion de l'invention, contient de préférence dans son système tensio-actif en outre un agent mouillant, bien que les triglycérides alcoxylés puissent également jouer ce rôle, notamment pour les suspensions les moins concentrées en matière active.

L'émulsion aqueuse mise en oeuvre dans la présente invention contient donc au moins de l'eau et des sucroglycérides.

Comme indiqué précédemment, les sucroglycérides proviennent de la transestérification de triglycérides par le saccharose.

Dans le présent texte, le terme "sucroglycérides" sera utilisé au pluriel, afin d'indiquer qu'ils ne sont pas constitués par un seul composé chimique.

Comme triglycérides, on utilise généralement les triglycérides des acides aliphatiques, saturés ou insaturés, ayant au moins 4 atomes de carbone. De préférence les acides dont dérivent les triglycérides ont 10 à 20 atomes de carbone.

La préparation des sucroglycérides peut se faire à partir de triglycérides de synthèse, obtenus par réaction du glycérol et d'acides gras. Cependant, il est plus intéressant au plan économique de faire appel aux triglycérides naturels. Ces triglycérides naturels sont des mélanges de triglycérides.

Comme exemples de tels triglycérides naturels, on peut citer le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin, l'huile de colza, l'huile de coprah, l'huile de noix de coco.

Dans la présente invention, les sucroglycérides utilisés proviennent de l'huile de palme, du saindoux, de l'huile de coprah, du suif, de l'huile de colza, l'huile de ricin.

Ils se présentent, soit sous forme liquide comme les sucroglycérides de l'huile de colza ou de l'huile de ricin, soit sous forme de pâtes plus ou moins consistantes, se différenciant notamment par leur point de fusion :

| | |
|---|---|
| - sucroglycérides de saindoux | 47 à 50 ° C, |
| - sucroglycérides de suif | 50 à 55 ° C, |
| - sucroglycérides d'huile de palme | 55 à 58 ° C |
| - sucroglycérides d'huile de coprah | 60 à 62 ° C. |

Un mode opératoire de préparation des sucroglycérides est décrit dans le brevet FR-A-2 463 152

On peut utiliser plusieurs sucroglycérides différents dans l'émulsion aqueuse, afin notamment de mettre en oeuvre leurs propriétés spécifiques différentes.

L'émulsion aqueuse de sucroglycérides entrant dans la composition de la suspo-émulsion peut également comporter un phospholipide, en association avec les sucroglycérides.

Parmi les phospholipides utilisés avec les sucroglycérides dans le cadre de l'invention, on peut citer les lécithines brutes d'origine végétale ou animale, telles que la lécithine de soja, la lécithine du jaune d'oeuf ainsi que toute fraction de lécithine.

Cette émulsion peut également comprendre d'autres composés tels que les triglycérides alcoxylés, les acides gras alcoxylés, les esters de sorbitan et les esters de sorbitan alcoxylés, qui sont plus particulièrement choisis parmi les triglycérides éthoxylés, les acides gras éthoxylés, les esters de sorbitan et les esters de sorbitan éthoxylés.

Les triglycérides éthoxylés peuvent être des triglycérides d'origine végétale ou animale (tels que le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin, l'huile de colza, l'huile de coprah, l'huile de noix de coco) éthoxylés.

Les acides gras éthoxylés sont des esters d'acides gras (tels que par exemple l'acide oléïque, l'acide stéarique) éthoxylés.

Les esters de sorbitan sont des esters du sorbitol cyclisé d'acides gras de $C_{10}$ à $C_{20}$ comme l'acide laurique, l'acide stéarique ou l'acide oléïque. Ces esters de sorbitan peuvent également être éthoxylés.

Le terme triglycéride éthoxylé vise dans la présente invention, aussi bien les produits obtenus par éthoxylation d'un triglycéride par l'oxyde d'éthylène que ceux obtenus par transestérification d'un triglycéride par un polyéthylène-glycol.

De même le terme acide gras éthoxylé inclut aussi bien les produits obtenus par éthoxylation d'un acide gras par l'oxyde d'éthylène que ceux obtenus par estérification d'un acide gras par un polyéthylène-glycol.

L'émulsion aqueuse, entrant dans la composition des suspo-émulsions de l'invention, comporte généralement, en poids par rapport au volume total de l'émulsion :

- de 0,1 % à 60 % de sucroglycérides,
- de 0 % à 50 % de phospholipide,
- de 0 % à 20 % de triglycéride alcoxylé et/ou d'acide gras alcoxylé et/ou d'ester de sorbitan et/ou d'ester de sorbitan alcoxylé,
- et le complément à 100 % d'eau.

De préférence, la composition en poids par volume de l'émulsion aqueuse est la suivante :

- de 3 % à 50 % de sucroglycérides,
- de 0 % à 40 % de phospholipide,
- de 0 % à 15 % de triglycéride alcoxylé et/ou d'acide gras alcoxylé et/ou d'ester de sorbitan et/ou d'ester de sorbitan alcoxylé,
- et le complément à 100 % d'eau.

Les émulsions aqueuses utilisées pour préparer les suspo-émulsions de l'invention présentent une très bonne stabilité physico-chimique et une bonne compatibilité avec un grand nombre de suspensions de matières actives.

L'émulsion aqueuse de sucroglycérides peut être réalisée par simple mélangeage des différents constituants, en utilisant toutes les techniques connues.

De préférence, afin d'obtenir des dimensions de particules de l'ordre de quelques micromètres, on effectuera la micronisation de l'émulsion à l'aide d'un moulin colloïdal ou d'une turbine à grande vitesse.

La matière active phytosanitaire utilisée dans la présente invention est sensiblement insoluble dans l'eau, ce qui signifie que sa solubilité dans l'eau à 20 °C est inférieure à 5 g/litre.

Il est bien évident que les matières actives utilisées doivent être stables vis-à-vis de l'eau.

On peut utiliser des mélanges de telles matières actives sans sortir du cadre de l'invention.

Comme exemples non limitatifs de matières actives qui peuvent être mises en oeuvre dans les suspo-émulsions de l'invention, on peut citer :

- la deltaméthrine,
- le propham,
- la tétraméthrine,
- le furalaxyl,
- l'heptachlor,
- le propanil,
- l'oxadiazon,
- le triflumizole,
- la diméthaméthrine,
- l'atrazine,
- le diuron,
- le néburon,
- le linuron,
- l'isoproturon,
- la simazine,
- l'améthryne,
- le phenmdipham,
- le pendiméthalin.

Les sucroglycérides qui peuvent entrer dans la composition du système tensio-actif des suspensions de matière active, ont été définis précédemment pour les émulsions aqueuses.

Il peut être avantageux dans certains cas d'associer aux sucroglycérides un phospholipide, tel que défini précédemment, sans que la présence d'un tel composé constitue un élément critique de la suspension de matière active.

Dans le système tensio-actif à base de sucroglycérides, utilisé dans la suspension, le rapport pondéral phospholipide/sucroglycérides est généralement de 0 à 3.

Le système tensio-actif à base de sucroglycérides, pouvant être utilisé pour préparer la suspension de matière active, comporte également au moins un triglycéride alcoxylé et/ou un acide gras alcoxylé et/ou un ester de sorbitan et/ou un ester de sorbitan alcoxylé. Ce sont plus particulièrement les triglycérides éthoxylés, les acides gras éthoxylés, les esters de sorbitan et les esters de sorbitan éthoxylés qui ont été décrits précédemment.

Les triglycérides alcoxylés et/ou les acides gras alcoxylés et/ou les esters de sorbitan et/ou les esters de sorbitan alcoxylés représentent généralement de 0,1 à 3 % en poids par volume de la suspension et de préférence de 0,2 % à 2,8 % en poids/volume.

Le système tensio-actif à base de sucroglycérides, pouvant être utilisé pour préparer la suspension de matière active, comporte de préférence également au moins un agent mouillant.

L'agent mouillant est un composé tel que défini dans la norme NF T 73-000.

Il s'agit notamment de sels anioniques de tensio-actifs et d'alcools alcoxylés ou d'alkylphénols alcoxylés représentés par les formules suivantes :

$R_1$-$SO_3$-M

$R_2$-$SO_4$-M
$R_3$-$(OE)_n$-H
$R_3$-$(OP)_n$-H
$R_3$-$(OE\text{-}OP)_n$-H
$R_4$-COONa

dans lesquelles :

- $R_1$ représente
  . un radical alkylphényle tel que dodécylphényle ou nonylphényle,
  . un radical alkyle tel que dodécyle,
  . un radical bis(octyloxycarbonyl)-1,2 éthyle, de préférence bis(éthyl-2 hexyloxycarbonyl)-1,2 éthyle,
- $R_2$ représente
  . un radical alkyle tel que dodécyle,
  . un radical alkylphénol éthoxylé tel que nonylphénol éthoxylé avec 2 à 50 motifs OE,
  . un radical alkyle éthoxylé,
- $R_3$ représente
  . un radical alkylphényle tel que nonylphényle, un radical alkylnaphtyle,
  . un radical alkyle ayant 8 à 20 atomes de carbone, et de préférence de 10 à 14 atomes de carbone,
- n est un nombre de 4 à 12,
- OE représente le motif oxyéthylène et OP le motif oxypropylène,
- $R_4$ représente un radical alkyle ayant 7 à 23 atomes de carbone,
- M représente Na, K, $NH_4$, un cation triéthanolammonium, diéthanolammonium ou N-méthyl-cyclohexylammonium.

L'agent mouillant peut également être un tensio-actif à base de silicone tel que des copolymères de polydiméthylsiloxane et soit d'homopolymère d'éthylène-glycol, soit de copolymère d'éthylène-glycol et de propylène-glycol ou un tensio-actif fluoré tel que des composés comportant une chaîne linéaire perfluorocarbonée, hydrophobe et oléophobe, et une partie hydrophile comportant par exemple un groupement sulfonique, acide ou neutralisé, un groupement carboxylique, un reste alcool éthoxylé.

Les suspensions comprennent généralement de 0,05 % à 1 % en poids d'agent mouillant par rapport au volume total de la suspension, et de préférence de 0,1 % à 0,8 % en poids/volume.

Le tensio-actif non-ionique, qui peut être utilisé pour préparer la suspension de matière active, peut être choisi notamment parmi :

- les di(phényl-1 éthyl) phénols alcoxylés,
- les tri(phényl-1 éthyl) phénols alcoxylés,
- les alkylphénols alcoxylés,
- les amines grasses alcoxylées,
- les alcools gras alcoxylés,
- les huiles de ricin alcoxylées,
- les polymères séquencés oxyde d'éthylène-oxyde de propylène (OE-OP) ou oxyde d'éthylène-oxyde de propylène-oxyde d'éthylène (OE-OP-OE).

Les motifs alcoxyles de ces tensio-actifs sont des motifs oxyéthylène et/ou oxypropylène.

Leur nombre varie habituellement de 2 à 100 selon le HLB (balance hydrophilie/lipophilie) souhaité.

De préférence le nombre de motifs alcoxyles se situe entre 4 et 50.

Les alkylphénols alcoxylés ont généralement 1 ou 2 groupes alkyles, linéaires ou ramifiés, ayant 4 à 12 atomes de carbone, notamment octyles, nonyles ou dodécyles.

Les amines grasses alcoxylées ont généralement de 10 à 22 atomes de carbone.

Les alcools gras alcoxylés ont généralement de 6 à 22 atomes de carbone.

A titre d'exemples de tensio-actifs non-ioniques, on peut citer :

- le di(phényl-1 éthyl)phénol éthoxylé avec 15 motifs oxyde d'éthylène (OE),
- le di(phényl-1 éthyl)phénol éthoxylé avec 5 motifs OE,
- le di(phényl-1 éthyl)phénol éthoxylé avec 10 motifs OE,
- le tri(phényl-1 éthyl)phénol éthoxylé avec 16 motifs OE,
- le tri(phényl-1 éthyl)phénol éthoxylé avec 20 motifs OE,
- le tri(phényl-1 éthyl)phénol éthoxylé avec 25 motifs OE,
- le tri(phényl-1 éthyl)phénol éthoxylé avec 40 motifs OE,
- les tri(phényl-1 éthyl)phénols éthoxy-propoxylés avec 25 motifs OE + OP,
- les nonylphénols éthoxy-propoxylés avec 25 motifs OE + OP,

- les nonylphénols éthoxy-propoxylés avec 30 motifs OE + OP,
- les nonylphénols éthoxy-propoxylés avec 40 motifs OE + OP,
- les nonylphénols éthoxy-propoxylés avec 55 motifs OE + OP,
- les nonylphénols éthoxy-propoxylés avec 80 motifs OE + OP,
- les polymères triséquencés OE-OP-OE.

Le tensio-actif anionique, qui peut être utilisé pour préparer la suspension de matière active, est choisi notamment parmi :

- les esters phosphoriques des alkylphénols alcoxylés, des di(phényl-1 éthyl)phénols alcoxylés, des tri-(phényl-1 éthyl)phénols alcoxylés, des alcools gras alcoxylés ;
- les esters sulfuriques des alkylphénols alcoxylés, des di(phényl-1 éthyl)phénols alcoxylés, des tri-(phényl-1 éthyl)phénols alcoxylés, des alcools gras alcoxylés ;
- les esters sulfoniques des alkylphénols alcoxylés, des di(phényl-1 éthyl)phénols alcoxylés, des tri-(phényl-1 éthyl)phénols alcoxylés ;
- les sels des acides polycarboxyliques, les homo- et copolymères d'acides polycarboxyliques (comme les acides polyacryliques et polyméthacryliques), les copolymères à base d'anhydride maléïque et de diisobutylène ;
- les alkylnaphtalène-sulfonates, les poly(alkylnaphtalène-sulfonates) ;
- les dihydroxydiphényl-sulfonates condensés avec le formol.

Les motifs alcoxyles de ces tensio-actifs anioniques sont des motifs oxyéthylène et/ou oxypropylène.

Leur nombre varie habituellement de 2 à 100 selon le HLB (balance hydrophilie/lipophilie) souhaité.

De préférence le nombre de motifs alcoxyles se situe entre 4 et 50.

A titre d'exemples de tensio-actifs anioniques, on peut citer notamment :

- les sels de triéthanolamine des mono- et diester phosphoriques du tri(phényl-1 éthyl)phénol éthoxylé avec 16 motifs OE,
- les sels de potassium des mono- et diester phosphoriques du tri(phényl-1 éthyl)phénol éthoxylé avec 16 motifs OE,
- le sulfate acide du di(phényl-1 éthyl)phénol éthoxylé avec 11 motifs OE,
- le sel de potassium du monoester sulfurique du di(phényl-1 éthyl)phénol éthoxylé avec 15 motifs OE,
- le sel de triéthanolamine du monoester sulfurique du di(phényl-1 éthyl)phénol éthoxylé avec 11 motifs OE,
- le sel d'ammonium du monoester sulfurique du tri(phényl-1 éthyl)phénol éthoxylé avec 16 motifs OE,
- le phosphate acide de nonylphénol éthoxylé avec 9 motifs OE,
- le méthylnaphtalène-sulfonate de sodium,
- le sel de sodium de l'acide polyacrylique.

On peut bien évidemment utiliser des mélanges de tensio-actifs non-ioniques et/ou de tensio-actifs anioniques.

La suspension aqueuse de la matière active comporte généralement de 0,1 % à 90 % en poids de matière active, par rapport au volume total de la suspension et de préférence de 0,5 % à 85 % en poids/volume.

Soit elle comprend de 0,2 % à 15 % en poids/volume de tensio-actif non-ionique et/ou anionique et de préférence de 0,5 % à 10 % en poids/volume.

Soit elle comprend de :

- 0,1 % à 5 % en poids de sucroglycérides et de phospholipide, et de préférence de 0,2 % à 4 %,
- 0,1 % à 3 % en poids de triglycéride alcoxylé et/ou d'acide gras alcoxylé et/ou d'ester de sorbitan et/ou d'ester de sorbitan alcoxylé tels que définis précédemment, et de préférence de 0,2 % à 2,8 %,
- 0,05 % à 1 % en poids d'un agent mouillant, et de préférence de 0,1 % à 0,8 %,

par rapport au volume total de la suspension aqueuse.

On peut, sans sortir du cadre de la présente invention, préparer plusieurs suspensions aqueuses de matières actives, telles que définies précédemment, puis préparer une suspo-émulsion à partir d'une émulsion aqueuse de sucroglycérides et de ces différentes suspensions aqueuses de matières actives.

Les suspo-émulsions selon l'invention peuvent contenir, outre les composés définis précédemment, d'autres composés usuels dans les compositions phytosanitaires, tels que des antimousses comme les organopolysiloxanes ; des épaississants organiques hydrosolubles ou susceptibles de gonfler dans l'eau, tels que les polysaccharides comme la gomme xanthane, les alginates, les méthylcelluloses carboxylées ou hydroxylées, les macromolécules synthétiques du type polyacrylates, polymaléates, polyvinylpyrrolidones, alcools polyvinyliques, ou inorganiques tels que les bentonites, les silices ; un antigel comme le monopropylène-glycol, le monoéthylène-glycol, le diéthylène-glycol, le triéthylène-glycol, le tétraéthylène-glycol ou l'urée.

D'autres additifs auxiliaires pouvant être présents sont des agents protecteurs vis-à-vis de l'oxydation, des rayons UV ou des variations de pH, des colorants ou des bactéricides.

Comme indiqué précédemment, la suspo-émulsion peut être préparée à partir des différents composés qui la constituent.

De préférence, la suspo-émulsion est préparée par mélangeage de la suspension aqueuse de matière active et de l'émulsion aqueuse précédemment décrites.

Les proportions de suspension et d'émulsion sont telles que la suspo-émulsion contient globalement de 0,1 % à 60 % en poids de matière active par rapport à son volume total.

Les proportions de suspension et d'émulsion sont telles que la suspo-émulsion contient de 0,1 % à 12 % en poids de tensio-actif non-ionique et/ou anionique par rapport à son volume total.

Les proportions de suspension et d'émulsion sont telles que la suspo-émulsion contient de 0,1 % à 60 % en poids de sucroglycérides par rapport à son volume total.

Les proportions de suspension et d'émulsion sont telles que la suspo-émulsion contient de 0 % à 50 % en poids de phospholipide par rapport à son volume total.

Les proportions de suspension et d'émulsion sont telles que la suspo-émulsion contient de 0 % à 20 % en poids de triglycéride alcoxylé et/ou d'acide gras alcoxylé et/ou d'ester de sorbitan et/ou d'ester de sorbitan alcoxylé par rapport à son volume total.

Les proportions de suspension et d'émulsion sont telles que la suspo-émulsion contient de 0,05 % à 0,7 % en poids d'agent mouillant par rapport à son volume total.

Les suspo-émulsions de l'invention sont très stables sur une large gamme de température (par exemple entre - 10 °C et + 54 °C).

Elles sont utilisées telles quelles ou après dilution à l'eau pour le traitement et la protection des plantes.

Elles présentent l'avantage d'être filmogènes, ce qui assure une bonne fixation et une bonne permanence de la matière active sur les plantes à traiter ou sur les parasites à détruire.

La présence de sucroglycérides favorise la bio-disponibilité de la matière active.

Dans les exemples qui suivent et qui illustrent l'invention, les quantités des différents constituants des suspensions ou des émulsions sont données en grammes pour l'obtention de 1000 $cm^3$ de suspension ou d'émulsion.

EXEMPLES DE PREPARATION DE SUSPENSIONS DE MATIERE ACTIVE

Le mode opératoire utilisé est le même pour les différents exemples.

Il consiste tout d'abord à disperser par simple agitation les sucroglycérides fondus, dans l'eau à 60 °C, à raison de 10 % en poids/poids.

Cette pré-dispersion permet le gonflement des sucroglycérides.

Dans les exemples, on indiquera simplement que les sucroglycérides sont mis en oeuvre sous forme de pré-dispersion à 10 % poids/poids dans l'eau.

On dissout dans l'eau le triglycéride éthoxylé ou l'acide gras éthoxylé et l'agent mouillant.

On ajoute ensuite la pré-dispersion de sucroglycérides et éventuellement le composé antigel.

Puis on ajoute la matière active par petites fractions sous agitation ainsi que, le cas échéant, l'antimousse.

Le mélange est homogénéisé à l'aide d'une turbine, puis est broyé pendant quelques minutes dans un broyeur à billes (billes de verre de 1 mm de diamètre) jusqu'à obtention d'une granulométrie moyenne de la matière active de 3 à 4 micromètres.

On suit l'évolution du diamètre des particules à l'aide d'un granulomètre.

Le cas échéant, on ajoute un épaississant (gomme xanthane) et on agite encore pendant environ 30 minutes.

EXEMPLES 1 et 2 et ESSAI COMPARATIF A

Préparation de suspensions aqueuses d'atrazine.

L'atrazine est un herbicide connu, ayant un point de fusion de 175 °C et une solubilité dans l'eau à 25 °C de 0,028 g/l :

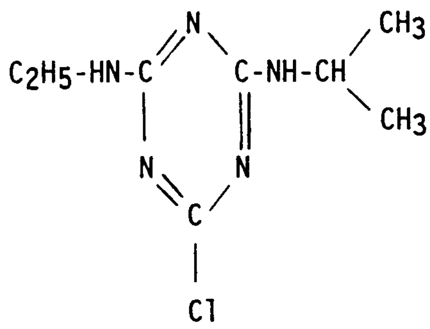

En suivant le mode opératoire décrit précédemment, on prépare quatre suspensions aqueuses selon l'invention d'atrazine ainsi qu'une suspension aqueuse d'atrazine ne comportant pas de triglycéride éthoxylé (essai comparatif A) dont les compositions respectives sont indiquées dans le tableau 1 ci-après.

Le tableau 1 indique également pour chacune des suspensions :

- le diamètre moyen des particules de la matière active (en micromètres)
- la valeur en secondes de la mesure de la vitesse d'écoulement de la suspension (avant addition de l'épaississant : gomme xanthane) selon la COUPE FORD n° 4 (CF n° 4)
- l'abréviation OE correspond au motif oxyéthylène dans la formule des triglycérides ou des acides gras éthoxylés.

L'antimousse utilisé est un polydiorganosiloxane.

les suspensions des exemples 1 et 2 ont été stables :

- plus de 2 mois à 45 °C et
- plus de 2 mois en cycle de températures : 24 heures à + 45 °C, 24 heures à - 5 °C.

Par dilution à l'eau, elles ont conduit à des suspensions de 0,5 % à 2 % de matière active, sans floculation, ni sédimentation pendant une durée d'utilisation d'environ 24 heures.

La suspension selon l'essai comparatif est également stable au stockage, mais son broyage est difficile et on observe une floculation dans l'eau à la dilution.

| Constituants de la suspension | Exemple 1 | Exemple 2 | Essai A |
|---|---|---|---|
| Atrazine | 500 g | 500 g | 500 g |
| Sucroglycérides d'huile de ricin à 10 % dans l'eau | 150 g | 80 g | 150 g |
| Huile de ricin éthoxylée (environ 33 OE) | 5 g | 4 g | 0 g |
| Huile de coprah éthoxylée (environ 27 OE) | 0 g | 0 g | 0 g |
| Dodécylbenzène sulfonate de sodium | 0 g | 2 g | 2 g |
| Lauryl sulfate de sodium | 2 g | 0 g | 0 g |
| Monopropylène-glycol | 70 g | 80 g | 80 g |
| Gomme xanthane à 2 % dans l'eau | 50 g | 50 g | 50 g |
| Antimousse | 1 g | 1 g | 1 g |
| Eau (quantité suffisante pour 1000 cm3) | 300 g | 450 g | 295 g |
| Diamètre moyen des particules (en micromètres) | 3,1 | 3,1 | — |
| CF n° 4 | 17 s | 15 s | — |

TABLEAU 1

EXEMPLE 3

Préparation d'une suspension aqueuse d'atrazine.

En suivant le mode opératoire décrit précédemment, on prépare une suspension aqueuse d'atrazine, dont la composition et les propriétés sont indiquées ci-après (avec les mêmes abréviations que pour le tableau 1).

| | |
|---|---|
| - Atrazine | 500 g |
| - Sucroglycérides de coprah à 10 % dans l'eau | 100 g |
| - Huile de ricin éthoxylée (environ 33 OE) | 5 g |
| - Dodécylbenzène sulfonate de sodium | 2 g |
| - Monopropylène-glycol | 80 g |
| - Gomme xanthane à 2 % dans l'eau | 50 g |
| - Antimousse | 1 g |
| - Eau (quantité suffisante pour 1000 cm3) | 338 g |
| - Diamètre moyen des particules (en micromètres) | 3,0 |
| - CF n° 4 | 20 s |

De même que pour les suspensions des exemples 1 et 2, la suspension de l'exemple 3 a été stable :

- plus de 2 mois à 45°C et
- plus de 2 mois en cycle de températures : 24 heures à + 45°C, 24 heures à - 5°C.

Par dilution à l'eau, elle a conduit à une suspension à 1 % de matière active, sans floculation, ni sédimentation pendant une durée d'utilisation d'environ 24 heures.

EXEMPLE 4

Préparation d'une suspension aqueuse de diuron.

En suivant le mode opératoire décrit précédemment, on prépare une suspension aqueuse de diuron dont la composition est indiquée ci-après (avec les mêmes abréviations que pour le tableau 1).

| | |
|---|---|
| - Diuron | 450 g |
| - Sucroglycérides de beurre à 10 % dans l'eau | 100 g |
| - Huile de ricin éthoxylée (environ 33 OE) | 10 g |
| - Dodécylbenzène sulfonate de sodium | 5 g |
| - Monopropylène-glycol | 70 g |
| - Gomme xanthane à 2 % dans l'eau | 60 g |
| - Antimousse | 1 g |
| - Eau (quantité suffisante pour 1000 cm3) | 455 g |
| - Diamètre moyen des particules (en micromètres) | 3,5 |
| - CF n° 4 | 12 s |

De même que pour les suspensions des exemples 1 et 2, la suspension de l'exemple 4 a été stable :

- plus de 2 mois à 45°C et
- plus de 2 mois en cycle de températures : 24 heures à + 45°C, 24 heures à - 5°C.

Par dilution à l'eau, elle a conduit à une suspension de 1,5 % de matière active, sans floculation, ni sédimentation pendant une durée d'utilisation d'environ 24 heures.

EXEMPLE 5

Préparation de 1000 $cm^3$ d'une suspension aqueuse d'atrazine.

Dans un mélange constitué de 60 g de monopropylèneglycol et de 415 g d'eau, on dissout 5 g de nonylphénol éthoxylé avec 10 motifs OE et 35 g de phosphate de tri(phényl-1 éthyl)phénol éthoxylé avec 16 motifs OE. On disperse dans cette solution 500 g d'atrazine et 1 g d'antimousse polydiorganosiloxanique, sous agitation. Le mélange est ensuite homogénéisé à l'aide d'une turbine, puis est broyé pendant quelques minutes dans un broyeur à billes (billes de verre de 1 mm de diamètre ; 4000 tours/min) jusqu'à obtention d'une granulométrie moyenne de la matière active de 3 à 4 micromètres.

On suit l'évolution du diamètre des particules à l'aide d'un granulomètre.

Après broyage, 60 g d'une solution à 2 % de gomme xanthane en poids dans l'eau sont ajoutés sous agitation lente.

EXEMPLE 6

Préparation de 1000 $cm^3$ d'une suspension aqueuse de diuron.

En opérant comme dans l'exemple 5, on prépare une suspension de composition suivante :

| | |
|---|---|
| - diuron | 500 g |
| - alcool gras éthoxypropoxylé (indice d'hydroxyle de 107 à 117) | 2 g |
| - sulfate de tri(phényl-1 éthyl)phénol éthoxylé avec 16 motifs OE | 30 g |
| - monopropylèneglycol | 60 g |
| - antimousse | 1 g |
| - gomme xanthane à 2 % en poids dans l'eau | 70 g |
| - eau (quantité suffisante pour 1000 $cm^3$) | 480 g |

EXEMPLES 7

Emulsion de sucroglycérides d'huile de ricin.

On chauffe à 60 ° C 200 $cm^3$ d'eau déminéralisée. On porte également à 60 ° C le sucroglycéride d'huile de ricin nécessaire à la réalisation de l'émulsion, afin de le rendre liquide et suffisamment fluide pour être coulé.

L'émulsion est réalisée à l'aide d'un homogénéiseur de laboratoire.

40 g de sucroglycérides d'huile de ricin sont coulés lentement (5 min environ), dans l'eau déminéralisée, sous agitation (turbine tournant à 2000 tr/min). En fin d'addition, la vitesse de la turbine est portée à 8000 tr/min pendant 3 min.

L'émulsion ainsi obtenue est refroidie à température ambiante, sous une agitation lente.

Elle présente les caractéristiques suivantes :

| | |
|---|---|
| - diamètre moyen des particules | 1,6 µm |
| - pH | 7,7 |

L'émulsion est stable pendant plus de 2 mois à 45 ° C.

EXEMPLE 8

Emulsion de sucroglycérides d'huile de beurre.

On répète l'exemple 7 en remplaçant le sucroglycéride d'huile de ricin par 32 g de sucroglycéride d'huile de beurre.

L'émulsion obtenue présente les caractéristiques suivantes :

| | |
|---|---|
| - diamètre moyen des particules | 2,2 µm |
| - pH | 6,9 |

L'émulsion est stable pendant plus de 2 mois à 45 ° C.

EXEMPLE 9

Emulsion de sucroglycérides d'huile de coprah.

On répète l'exemple 7 en remplaçant le sucroglycéride d'huile de ricin par 26 g de sucroglycéride d'huile de coprah.

L'émulsion obtenue présente les caractéristiques suivantes :

| | |
|---|---|
| - diamètre moyen des particules<br>- pH | 0,6 µm<br>6,9 |

L'émulsion est stable pendant plus de 2 mois à 45 ° C.

EXEMPLE 10

Emulsion de sucroglycérides d'huile de ricin.

On répète l'exemple 7 en utilisant 70 g de sucroglycéride d'huile de ricin. L'émulsion obtenue présente les caractéristiques suivantes :

| | |
|---|---|
| - diamètre moyen des particules<br>- pH | 1,5 µm<br>7,8 |

L'émulsion est stable pendant plus de 2 mois à 45 ° C.

EXEMPLES 11 à 29

Préparation de suspo-émulsions à partir des suspensions aqueuses de matière active et des émulsions aqueuses de sucroglycérides des exemples précédents.

A partir respectivement d'une suspension aqueuse d'une matière active et d'une émulsion aqueuse de sucroglycérides, obtenues dans les exemples précédents, on prépare par simple mélangeage différentes suspo-émulsions.

Les volumes relatifs de suspension et d'émulsion sont indiqués dans le tableau 2 ci-après.

Chaque suspo-émulsion obtenue a été stable :

| | |
|---|---|
| - plus de 2 mois à 45 ° C et | |
| - plus de 2 mois en cycle de températures | . 24 heures à + 45 ° C,<br>. 24 heures à - 5 ° C. |

Tableau 2

| SUSPO-EMULSION | SUSPENSION UTILISEE | EMULSION UTILISEE |
|---|---|---|
| Exemple 11 | 50 cm3 de l'exemple 1 | 25 cm3 de l'exemple 7 |
| Exemple 12 | 25 cm3 de l'exemple 1 | 25 cm3 de l'exemple 7 |
| Exemple 13 | 25 cm3 de l'exemple 2 | 25 cm3 de l'exemple 7 |
| Exemple 14 | 25 cm3 de l'exemple 5 | 25 cm3 de l'exemple 7 |
| Exemple 15 | 50 cm3 de l'exemple 6 | 25 cm3 de l'exemple 7 |
| Exemple 16 | 25 cm3 de l'exemple 1 | 25 cm3 de l'exemple 8 |
| Exemple 17 | 75 cm3 de l'exemple 1 | 25 cm3 de l'exemple 8 |
| Exemple 18 | 25 cm3 de l'exemple 4 | 25 cm3 de l'exemple 8 |
| Exemple 19 | 50 cm3 de l'exemple 4 | 25 cm3 de l'exemple 8 |
| Exemple 20 | 25 cm3 de l'exemple 3 | 25 cm3 de l'exemple 9 |
| Exemple 21 | 50 cm3 de l'exemple 3 | 25 cm3 de l'exemple 9 |
| Exemple 22 | 75 cm3 de l'exemple 5 | 25 cm3 de l'exemple 9 |
| Exemple 23 | 50 cm3 de l'exemple 6 | 25 cm3 de l'exemple 9 |
| Exemple 24 | 75 cm3 de l'exemple 1 | 25 cm3 de l'exemple 10 |
| Exemple 25 | 100 cm3 de l'exemple 2 | 25 cm3 de l'exemple 10 |
| Exemple 26 | 125 cm3 de l'exemple 3 | 25 cm3 de l'exemple 10 |
| Exemple 27 | 25 cm3 de l'exemple 4 | 25 cm3 de l'exemple 10 |
| Exemple 28 | 50 cm3 de l'exemple 5 | 25 cm3 de l'exemple 10 |
| Exemple 29 | 150 cm3 de l'exemple 6 | 25 cm3 de l'exemple 10 |

## Revendications

**1.** Suspo-émulsion de matière active phytosanitaire solide, de point de fusion supérieur ou égal à 45 °C et de solubilité dans l'eau à 20 °C inférieur à 5g/litre, caractérisée en ce qu'elle est susceptible d'être obtenue par mélangeage :
- d'une émulsion aqueuse exempte d'huile et comprenant au moins des sucroglycérides,
- avec une suspension aqueuse de ladite matière active, comprenant au moins soit un tensio-actif non-ionique et/ou anionique, soit un système tensio-actif comprenant des sucroglycérides, un triglycéride alcoxylé et/ou un acide gras alcoxylé et/ou un ester de sorbitan et/ou un ester de sorbitan alcoxylé.

**2.** Suspo-émulsion de matière active selon la revendication 1, caracterisée en ce qu'elle est susceptible d'être obtenue par mélangeage :
- d'une émulsion aqueuse exempte d'huile comprenant au moins des sucroglycèrides,
- avec une suspension aqueuse de ladite matière active, comprenant au moins soit un tensio-actif non-ionique et/ou anionique, soit un système tensio-actif comprenant des sucroglycérides, un triglycéride alcoxylé et/ou un acide gras alcoxylé et/ou un ester de sorbitan et/ou un ester de sorbitan alcoxylè et un agent mouillant.

**3.** Suspo-émulsion selon l'une des revendications 1 ou 2, caractérisée en ce que les sucroglycérides sont préparés par transestérification de triglycérides, de préférence naturels, par le saccharose.

**4.** Suspo-émulsion selon la revendication 3, caractérisée en ce que les triglycérides naturels sont choisis parmi le saindoux, le suif, l'huile d'arachide, l'huile de beurre, l'huile de graine de coton, l'huile de lin,

l'huile d'olive, l'huile de palme, l'huile de pépins de raisin, l'huile de poisson, l'huile de soja, l'huile de ricin, l'huile de colza, l'huile de coprah, l'huile de noix de coco.

**5.** Suspo-émulsion selon l'une des revendications 1 à 4, caractérisée en ce que les sucroglycérides utilisés proviennent de l'huile de palme, du saindoux, de l'huile de coprah, du suif, de l'huile de colza, l'huile de ricin.

**6.** Suspo-émulsion selon l'une des revendications 1 à 5, caractérisée en ce que l'émulsion aqueuse contient un phospholipide choisi parmi les lécithines brutes d'origine végétale ou animale, telles que la lécithine de soja, la lécithine du jaune d'oeuf ainsi que toute fraction de lécithine.

**7.** Suspo-émulsion selon l'une des revendications 1 à 6, caractérisée en ce que l'émulsion aqueuse comporte, en poids par rapport au volume total de l'émulsion :
- de 0,1 % à 60 % de sucroglycérides,
- de 0 % à 50 % de phospholipide,
- de 0 % à 20 % de triglycéride alcoxylé et/ou d'acide gras alcoxylé et/ou d'ester de sorbitan et/ou d'ester de sorbitan alcoxylé,
- et le complément à 100 % d'eau,

et de préférence :
- de 3 % à 50 % de sucroglycérides,
- de 0 % à 40 % de phospholipide,
- de 0 % à 15 % de triglycéride alcoxylé et/ou d'acide gras alcoxylé et/ou d'ester de sorbitan et/ou d'ester de sorbitan alcoxylé,
- et le complément à 100 % d'eau.

**8.** Suspo-émulsion selon l'une des revendications 1 à 7, caractérisée en ce que l'émulsion aqueuse comporte des triglycérides alcoxylés et/ou des acides gras alcoxylés et/ou des esters de sorbitan et/ou des esters de sorbitan alcoxylés, plus particulièrement choisis parmi les triglycérides éthoxylés, les acides gras éthoxylés, les esters de sorbitan et les esters de sorbitan éthoxylés.

**9.** Suspo-émulsion selon la revendication 8, caractérisée en ce que les triglycérides éthoxylés sont des triglycérides d'origine végétale ou animale, tels que le saindoux, le suif, l'huile d'arachide, l'huile de beurre, l'huile de graine de coton, l'huile de lin, l'huile d'olive, l'huile de palme, J'huile de pépins de raisin, l'huile de poisson, l'huile de soja, l'huile de ricin, l'huile de colza, l'huile de coprah, l'huile de noix de coco, éthoxylés.

**10.** Suspo-émulsion selon la revendication 8, caractérisée en ce que les acides gras éthoxylés sont des esters d'acides gras, tels que l'acide oléïque ou l'acide stéarique, éthoxylés.

**11.** Suspo-émulsion selon la revendication 8, caractérisée en ce que les esters de sorbitan sont des esters du sorbitol cyclisé d'acides gras de $C_{10}$ à $C_{20}$ comme l'acide laurique, l'acide stéarique ou l'acide oléïque.

**12.** Suspo-émulsion selon l'une des revendications 1 à 11, caractérisée en ce que la matière active phytosanitaire est choisie parmi :
- la deltaméthrine,
- le propham,
- la tétraméthrine,
- le furalaxyl,
- l'heptachlor,
- le propanil,
- l'oxadiazon,
- le triflumizole,
- la diméthaméthrine,
- l'atrazine,
- le diuron,
- le néburon,
- le linuron,

- l'isoproturon,
- la simazine,
- l'améthryne,
- le phenmdipham,
- le pendiméthalin.

**13.** Suspo-émulsion selon l'une des revendications 1 à 12, caractérisée en ce qu'elle comprend plusieurs matières actives phytosanitaires.

**14.** Suspo-émulsion selon l'une des revendications 1 à 13, caractérisée en ce que la suspension aqueuse de matière active comporte un tensio-actif non-ionique choisi parmi :
- les di(phényl-1 éthyl) phénols alcoxylés,
- les tri(phényl-1 éthyl) phénols alcoxylés,
- les alkylphénols alcoxylés,
- les amines grasses alcoxylées,
- les alcools gras alcoxylés,
- les huiles de ricin alcoxylées,
- les polymères séquencés oxyde d'éthylène-oxyde de propylène (OE-OP) ou oxyde d'éthylène-oxyde de propylène-oxyde d'éthylène (OE-OP-OE).

**15.** Suspo-émulsion selon la revendication 14, caractérisée en ce que les motifs alcoxyles de ces tensio-actifs sont des motifs oxyéthylène et/ou oxypropylène, dont le nombre varie de 2 à 100 et de préférence de 4 à 50.

**16.** Suspo-émulsion selon l'une des revendications 14 ou 15, caractérisée en ce que le tensio-actif non-ionique est choisi parmi :
- le di(phényl-1 éthyl)phénol éthoxylé avec 15 motifs oxyde d'éthylène (OE),
- le di(phényl-1 éthyl)phénol éthoxylé avec 5 motifs OE,
- le di(phényl-1 éthyl)phénol éthoxylé avec 10 motifs OE,
- le tri(phényl-1 éthyl)phénol éthoxylé avec 16 motifs OE,
- le tri(phényl-1 éthyl)phénol éthoxylé avec 20 motifs OE,
- le tri(phényl-1 éthyl)phénol éthoxylé avec 25 motifs OE,
- le tri(phényl-1 éthyl)phénol éthoxylé avec 40 motifs OE,
- les tri(phényl-1 éthyl)phénols éthoxy-propoxylés avec 25 motifs OE + OP,
- les nonylphénols éthoxy-propoxylés avec 25 motifs OE + OP,
- les nonylphénols éthoxy-propoxylés avec 30 motifs OE + OP,
- les nonylphénols éthoxy-propoxylés avec 40 motifs OE + OP,
- les nonylphénols éthoxy-propoxylés avec 55 motifs OE + OP,
- les nonylphénols éthoxy-propoxylés avec 80 motifs OE + OP,
- les polymères triséquencés OE-OP-OE.

**17.** Suspo-émulsion selon l'une des revendications 1 à 13, caractérisée en ce que la suspension aqueuse de matière active comporte un tensio-actif anionique choisi parmi :
- les esters phosphoriques des alkylphénols alcoxylés, des di(phényl-1 éthyl)phénols alcoxylés, des tri(phényl-1 éthyl)phénols alcoxylés, des alcools gras alcoxylés ;
- les esters sulfuriques des alkylphénols alcoxylés, des di(phényl-1 éthyl)phénols alcoxylés, des tri-(phényl-1 éthyl)phénols alcoxylés, des alcools gras alcoxylés ;
- les esters sulfoniques des alkylphénols alcoxylés, des di(phényl-1 éthyl)phénols alcoxylés, des tri(phényl-1 éthyl)phénols alcoxylés ;
- les sels des acides polycarboxyliques, les homo- et copolymères d'acides polycarboxyliques (comme les acides polyacryliques et polyméthacryliques), les copolymères à base d'anhydride maléïque et de diisobutylène ;
- les alkylnaphtalène-sulfonates, les poly(alkylnaphtalène-sulfonates) ;
- les dihydroxydiphényl-sulfonates condensés avec le formol.

**18.** Suspo-émulsion selon la revendication 17, caractérisée en ce que les motifs alcoxyles de ces tensio-actifs anioniques sont des motifs oxyéthylène et/ou oxypropylène, dont le nombre varie de 2 à 100 et de préférence de 4 à 50.

**19.** Suspo-émulsion selon l'une des revendications 17 ou 18, caractérisée en ce que le tensio-actif anionique est choisi parmi :
- les sels de triéthanolamine des mono- et diester phosphoriques du tri(phényl-1 éthyl)phénol éthoxylé avec 16 motifs OE,
- les sels de potassium des mono- et diester phosphoriques du tri(phényl-1 éthyl)phénol éthoxylé avec 16 motifs OE,
- le sulfate acide du di(phényl-1 éthyl)phénol éthoxylé avec 11 motifs OE,
- le sel de potassium du monoester sulfurique du di(phényl-1 éthyl)phénol éthoxylé avec 15 motifs OE,
- le sel de triéthanolamine du monoester sulfurique du di(phényl-1 éthyl)phénol éthoxylé avec 11 motifs OE,
- le sel d'ammonium du monoester sulfurique du tri(phényl-1 éthyl)phénol éthoxylé avec 16 motifs OE,
- le phosphate acide de nonylphénol éthoxylé avec 9 motifs OE,
- le méthylnaphtalène-sulfonate de sodium,
- le sel de sodium de l'acide polyacrylique.

**20.** Suspo-émulsion selon l'une des revendications 1 à 19, caractérisée en ce que la suspension aqueuse de la matière active comporte de 0,1 % à 90 % en poids de matière active, par rapport au volume total de la suspension et de préférence de 0,5 % à 85 % en poids/volume.

**21.** Suspo-émulsion selon la revendication 20, caractérisée en ce que la suspension aqueuse de la matière active comporte de 0,2 % à 15 % en poids de tensio-actif non-ionique et/ou anionique, et de préférence de 0,5 % à 10 % en poids par rapport au volume total de la suspension aqueuse.

**22.** Suspo-émulsion selon la revendication 20, caractérisée en ce que la suspension aqueuse de la matière active comporte de
- 0,1 % à 5 % en poids de sucroglycérides et de phospholipide, et de préférence de 0,2 % à 4 %,
- 0,1 % à 3 % en poids de triglycéride alcoxylé et/ou d'acide gras alcoxylé et/ou d'ester de sorbitan et/ou d'ester de sorbitan alcoxylé tels que définis précédemment, et de préférence de 0,2 % à 2,8 %,
- 0,05 % à 1 % en poids d'un agent mouillant, et de préférence de 0,1 % à 0,8 %,

par rapport au volume total de la suspension aqueuse.

**23.** Suspo-émulsion selon la revendication 22, caractérisée en ce que l'agent mouillant est choisi parmi les sels anioniques de tensio-actifs, les alcools alcoxylés ou les alkylphénols alcoxylés représentés par les formules suivantes :

$R_1$ $-SO_3-M$
$R_2-SO_4-M$
$R_3-(OE)_n-H$
$R_3-(OP)_n-H$
$R_3-(OE-OP)_n-H$
$R_4-COONa$

dans lesquelles :
- $R_1$ représente
  . un radical alkylphényle,
  . un radical alkyle,
  . un radical bis(octyloxycarbonyl)-1,2 éthyle,
- $R_2$ représente
  . un radical alkyle,
  . un radical alkylphénol éthoxylé,
  . un radical alkyle éthoxylé,
- $R_3$ représente
  . un radical alkylphényle,
  . un radical alkylnaphtyle,

. un radical alkyle ayant 8 à 20 atomes de carbone, et de préférence de 10 à 14 atomes de carbone,
- n est un nombre de 4 à 12,
- OE représente le motif oxyéthylène et OP le motif oxypropylène,
- $R_4$ représente un radical alkyle ayant 7 à 23 atomes de carbone,
- M représente Na, K, $NH_4$, un cation triéthanolammonium, diéthanolammonium ou N-méthylcyclohexylammonium.

**24.** Suspo-émulsion selon la revendication 22, caractérisée en ce que l'agent mouillant est choisi parmi les tensio-actifs à base de silicone tels que des copolymères de polydiméthylsiloxane et soit d'homopolymère d'éthylène-glycol, soit de copolymère d'éthylène-glycol et de propylène-glycol.

**25.** Suspo-émulsion selon la revendication 22, caractérisée en ce que l'agent mouillant est choisi parmi les tensio-actifs fluorés tels que des composés comportant une chaîne linéaire perfluorocarbonée, hydrophobe et oléophobe, et une partie hydrophile comportant un groupement sulfonique, acide ou neutralisé, un groupement carboxylique, un reste alcool éthoxylé.

**26.** Suspo-émulsion selon la revendication 22, caractérisée en ce que dans la suspension aqueuse de matière active le rapport pondéral sucroglycérides/phospholipide est de 0 à 3.

**27.** Suspo-émulsion selon l'une des revendications 1 à 26, caractérisée en ce que les proportions de suspension aqueuse et d'émulsion aqueuse sont telles que la suspo-émulsion contient de 0,1 % à 60 % en poids de matière active, par rapport à son volume total.

**28.** Suspo-émulsion selon l'une des revendications 1 à 27, caractérisée en ce que les proportions de suspension et d'émulsion sont telles que la suspo-émulsion contient de 0,1 % à 12 % en poids de tensio-actif non-ionique et/ou anionique par rapport à son volume total.

**29.** Suspo-émulsion selon l'une des revendications 1 à 28, caractérisée en ce que les proportions de suspension et d'émulsion sont telles que la suspo-émulsion contient de 0,1 % à 60 % en poids de sucroglycérides par rapport à son volume total.

**30.** Suspo-émulsion selon l'une des revendications 1 à 29, caractérisée en ce que les proportions de suspension et d'émulsion sont telles que la suspo-émulsion contient de 0 % à 50 % en poids de phospholipide par rapport à son volume total.

**31.** Suspo-émulsion selon l'une des revendications 1 à 30, caractérisée en ce que les proportions de suspension et d'émulsion sont telles que la suspo-émulsion contient de 0 % à 20 % en poids de triglycéride alcoxylé et/ou d'acide gras alcoxylé et/ou d'ester de sorbitan et/ou d'ester de sorbitan alcoxylé par rapport à son volume total.

**32.** Suspo-émulsion selon l'une des revendications 1 à 31, caractérisée en ce que les proportions de suspension et d'émulsion sont telles que la suspo-émulsion contient de 0,05 % à 0,7 % en poids d'agent mouillant par rapport à son volume total.

**33.** Utilisation des suspo-émulsions selon l'une des revendications 1 à 32, éventuellement après dilution à l'eau, pour le traitement et la protection des plantes.

## Claims

**1.** Suspo-emulsion of solid plant-protection active substance which has a melting point greater than or equal to 45 °C and has a solubility in water at 20 °C of less than 5g/litre, characterised in that it can be obtained by mixing:
- an aqueous oil-free emulsion comprising at least sucroglycerides,
- with an aqueous suspension of the said active substance, comprising at least either a nonionic and/or anionic surfactant or a surfactant system comprising sucroglycerides, an alkoxylated triglyceride and/or an alkoxylated fatty acid and/or a sorbitan ester and/or an alkoxylated sorbitan ester.

**2.** Suspo-emulsion of active substance according to claim 1, characterised in that it can be obtained by mixing:
- an aqueous oil-free emulsion comprising at least sucroglycerides,
- with an aqueous suspension of the said active substance, comprising at least either a nonionic and/or anionic surfactant or a surfactant system comprising sucroglycerides, an alkoxylated triglyceride and/or an alkoxylated fatty acid and/or a sorbitan ester and/or an alkoxylated sorbitan ester and a wetting agent.

**3.** Suspo-emulsion according to one of claims 1 or 2, characterised in that the sucroglycerides are prepared by trausesterification of triglycerides, preferably natural triglycerides, with sucrose.

**4.** Suspo-emulsion according to claim 3, characterised in that the natural triglycerides are chosen from lard, suet, groundnut oil, butter oil, cottonseed oil, linseed oil, olive oil, palm oil, grapeseed oil, fish oil, soya oil, castor oil, rapeseed oil, copra oil and coconut oil.

**5.** Suspo-emulsion according to one of claims 1 to 4, characterised in that the sucroglycerides used are obtained from palm oil, lard, copra oil, suet, rapeseed oil and castor oil.

**6.** Suspo-emulsion according to one of claims 1 to 5, characterised in that the aqueous emulsion contains a phospholipid chosen from crude lecithins of vegetable or animal origin, such as soya lecithin, egg yolk lecithin and any lecithin fraction.

**7.** Suspo-emulsion according to one of claims 1 to 6, characterised in that the aqueous emulsion comprises, by weight relative to the total volume of the emulsion:
- from 0.1% to 60% of sucroglycerides,
- from 0 % to 50% of phospholipid,
- from 0 % to 20% of alkoxylated triglyceride and/or alkoxylated fatty acid and/or sorbitan ester and/or alkoxylated sorbitan ester,
- and water to make up to 100%,

and preferably:
- from 3% to 50% of sucroglycerides,
- from 0% to 40% of phospholipid,
- from 0% to 15% of alkoxylated triglyceride and/or alkoxylated fatty acid and/or sorbitan ester and/or alkoxylated sorbitan ester,
- and water to make up to 100%.

**8.** Suspo-emulsion according to one of claims 1 to 7, characterised in that the aqueous emulsion comprises alkoxylated triglycerides and/or alkoxylated fatty acids and/or sorbitan esters and/or alkoxylated sorbitan eaters, more particularly chosen from ethoxylated triglycerides, ethoxylated fatty acids, sorbitan esters and ethoxylated sorbitan eaters.

**9.** Suspo-emulsion according to claim 8, characterised in that the ethoxylated triglycerides are ethoxylated triglycerides of vegetable or animal origin, such as lard, suet, groundnut oil, butter oil, cottonseed oil, linseed oil, olive oil, palm oil, grapeseed oil, fish oil, soya oil, castor oil, rapeseed oil, copra oil and coconut oil.

**10.** Suspo-emulsion according to claim 8, characterised in that the ethoxylated fatty acids are esters of ethoxylated fatty acids such as oleic acid or stearic acid.

**11.** Suspo-emulsion according to claim 8, characterised in that the sorbitan esters are cyclised sorbitol esters of $C_{10}$ to $C_{20}$ fatty acids, such as lauric acid, stearic acid or oleic acid.

**12.** Suspo-emulsion according to one of claims 1 to 11, characterised in that the plant-protection active substance is chosen from:
- deltamethrine,
- propham,
- tetramethrine,
- furalaxyl,

- heptachlor,
- propanil,
- oxadiazon,
- triflumizole,
- dimethamethrine,
- atrazine,
- diuron,
- neburon,
- linuron,
- isoproturon,
- simazine,
- amethryne,
- phenmedipham,
- pendimethalin.

**13.** Suspo-emulsion according to one of claims 1 to 12, characterised in that it comprises several plant-protection active substances.

**14.** Suspo-emulsion according to one of claims 1 to 13, characterised in that the aqueous suspension of active substance comprises a nonionic surfactant chosen from:
- alkoxylated di(1-phenylethyl)phenols,
- alkoxylated tri(1-phenylethyl)phenols,
- alkoxylated alkylphenols,
- alkoxylated fatty amines,
- alkoxylated fatty alcohols,
- alkoxylated castor oils, and
- ethylene oxide/propylene oxide (EO-PO) or ethylene oxide/propylene oxide/ethylene oxide (EO-PO-EO) block polymers.

**15.** Suspo-emulsion according to claim 14, characterised in that the alkoxyl units of these surfactants are ethylene oxide and/or propylene oxide units, the number of which varies from 2 to 100 and preferably from 4 to 50.

**16.** Suspo-emulsion according to one of claims 14 or 15, characterised in that the nonionic surfactant is chosen from:
- ethoxylated di(1-phenylethyl)phenol containing 15 ethylene oxide (EO) units,
- ethoxylated di(1-phenylethyl)phenol containing 5 EO units,
- ethoxylated di(1-phenylethyl)phenol containing 10 EO units,
- ethoxylated tri(1-phenylethyl)phenol containing 16 EO units,
- ethoxylated tri(1-phenylethyl)phenol containing 20 EO units,
- ethoxylated tri(1-phenylethyl)phenol containing 25 EO units,
- ethoxylated tri(1-phenylethyl)phenol containing 40 EO units,
- ethoxy-propoxylated tri(1-phenylethyl) phenols containing 25 EO + PO units,
- ethoxy-propoxylated nonylphenols containing 25 EO + PO units,
- ethoxy-propoxylated nonylphenols containing 30 EO + PO units,
- ethoxy-propoxylated nonylphenols containing 40 EO + PO units,
- ethoxy-propoxylated nonylphenols containing 55 EO + PO units,
- ethoxy-propoxylated nonylphenols containing 80 EO + PO units, and
- EO-PO-EO tri-block polymers.

**17.** Suspo-emulsion according to one of claims 1 to 13, characterised in that the aqueous suspension of active substance comprises an anionic surfactant chosen from:
- phosphoric esters of alkoxylated alkylphenols, alkoxylated di(1-phenylethyl)phenols, alkoxylated tri(1-phenylethyl)phenols and alkoxylated fatty alcohols;
- sulphuric eaters of alkoxylated alkylphenols, alkoxylated di(1-phenylethyl)phenols, alkoxylated tri-(1-phenylethyl)phenols and alkoxylated fatty alcohols;
- sulphonic esters of alkoxylated alkylphenols, alkoxylated di(1-phenylethyl)phenols and alkoxylated tri(1-phenylethyl)phenols;

- salts of polycarboxylic acids, homopolymers and copolymers of polycarboxylic acids (such as polyacrylic and polymethacrylic acids), and copolymers based on maleic anhydride and diisobutylene;
- alkylnaphthalenesulphonates and poly(alkylnaphthalenesulphonates); and
- condensation products of dihydroxydiphenylsulphonates and formol.

**18.** Suspo-emulsion according to claim 17, characterised in that the alkoxyl units in these anionic surfactants are ethylene oxide and/or propylene oxide units, the number of which varies from 2 to 100 and preferably from 4 to 50.

**19.** Suspo-emulsion according to one of claims 17 or 18, characterised in that the anionic surfactant is chosen from:
- triethanolamine salts of phosphoric monoesters and diesters of ethoxylated tri(1-phenylethyl)-phenol containing 16 EO units,
- potassium salts of phosphoric monoesters and diesters of ethoxylated tri(1-phenylethyl)phenol containing 16 EO units,
- the acid sulphate of ethoxylated di(1-phenylethyl)phenol containing 11 EO units,
- the potassium salt of the sulphuric monoester of ethoxylated di(1-phenylethyl)phenol containing 15 EO units,
- the triethanolamine salt of the sulphuric monoester of ethoxylated d(1-phenylethyl)phenol containing 11 EO units,
- the ammonium salt of the sulphuric monoester of ethoxylated tri(1-phenylethyl)phenol containing 16 EO units,
- the acid phosphate of ethoxylated nonylphenol containing 9 EO units,
- sodium methylnaphthalenesulphonate and
- the sodium salt of polyacrylic acid.

**20.** Suspo-emulsion according to one of claims 1 to 19, characterised in that the aqueous suspension of the active substance comprises from 0.1% to 90% by weight of active substance, relative to the total volume of the suspension, and preferably from 0.5% to 85% by weight/volume.

**21.** Suspo-emulsion according to claim 20, characterised in that the aqueous suspension of the active substance comprises from 0.2% to 15% by weight of nonionic and/or anionic surfactant, and preferably from 0.5% to 10% by weight relative to the total volume of the aqueous suspension.

**22.** Suspo-emulsion according to claim 20, characterised in that the aqueous suspension of the active substance comprises
- from 0.1% to 5% by weight of sucroglycerides and phospholipid, and preferably from 0.2% to 4%,
- from 0.1% to 3% by weight of alkoxylated triglyceride and/or alkoxylated fatty acid and/or sorbitan ester and/or alkoxylated sorbitan ester, as defined above, and preferably from 0.2% to 2.8%, and
- from 0.05% to 1% by weight of a wetting agent, and preferably from 0.1% to 0.8%,

relative to the total volume of the aqueous suspension.

**23.** Suspo-emulsion according to claim 22, characterised in that the wetting agent is chosen from the anionic salts of surfactants, alkoxylated alcohols or alkoxylated alkylphenols represented by the following formulae:

$R_1\text{-}SO_3\text{-}M$
$R_2\text{-}SO_4\text{-}M$
$R_3\text{-}(EO)_n\text{-}H$
$R_3\text{-}(PO)_n\text{-}H$
$R_3\text{-}(EO\text{-}PO)_n\text{-}H$
$R_4\text{-}COONa$

in which:
- $R_1$ represents

. an alkylphenyl radical,
. an alkyl radical, or
. a 1,2-bis(octyloxycarbonyl)ethyl radical,

- $R_2$ represents
  . an alkyl radical,
  . an ethoxylated alkylphenol radical, or
  . an ethoxylated alkyl radical,
- $R_3$ represents
  . an alkylphenyl radical,
  . an alkylnaphthyl radical, or
  . an alkyl radical having 8 to 20 carbon atoms and preferably from 10 to 14 carbon atoms,
- n is a number from 4 to 12,
- EO represents the ethylene oxide unit and PO the propylene oxide unit,
- $R_4$ represents an alkyl radical having 7 to 23 carbon atoms, and
- M represents Na, K, $NH_4$, or a triethanolammonium, diethanolammonium or N-methyl-cyclohexylammonium cation.

**24.** Suspo-emulsion according to claim 22, characterised in that the wetting agent is chosen from silicone-based surfactants, such as copolymers of polydimethylsiloxane and either ethylene glycol homopolymer or ethylene glycol/propylene glycol copolymer.

**25.** Suspo-emulsion according to claim 22, characterised in that the wetting agent is chosen from fluorinated surfactants, such as compounds comprising a hydrophobic and oleophobic straight perfluorocarbon chain, and a hydrophilic part comprising an acid or neutralised sulphonic group, a carboxyl group or an ethoxylated alcohol radical.

**26.** Suspo-emulsion according to claim 22, characterised in that the sucroglyceride/phospholipid ratio by weight in the aqueous suspension of active substance is from 0 to 3.

**27.** Suspo-emulsion according to one of claims 1 to 26, characterised in that the proportions of aqueous suspension and aqueous emulsion are such that the suspo-emulsion contains from 0.1% to 60% by weight of active substance, relative to its total volume.

**28.** Suspo-emulsion according to one of claims 1 to 27, characterised in that the proportions of suspension and emulsion are such that the suspo-emulsion contains from 0.1% to 12% by weight of nonionic and/or anionic surfactant relative to its total volume.

**29.** Suspo-emulsion according to one of claims 1 to 28, characterised in that the proportions of suspension and emulsion are such that the suspo-emulsion contains from 0.1% to 60% by weight of sucroglycerides relative to its total volume.

**30.** Suspo-emulsion according to one of claims 1 to 29, characterised in that the proportions of suspension and emulsion are such that the suspo-emulsion contains from 0% to 50% by weight of phospholipid relative to its total volume.

**31.** Suspo-emulsion according to one of claims 1 to 30, characterised in that the proportions of suspension and emulsion are such that the suspo-emulsion contains from 0% to 20% by weight of alkoxylated triglyceride and/or alkoxylated fatty acid and/or sorbitan ester and/or alkoxylated sorbitan ester relative to its total volume.

**32.** Suspo-emulsion according to one of claims 1 to 31, characterised in that the proportions of suspension and emulsion are such that the suspo-emulsion contains from 0.05% to 0.7% by weight of wetting agent relative to its total volume.

**33.** Use of the suspo-emulsions according to one of claims 1 to 32, if appropriate after dilution with water, for the treatment and the protection of plants.

## Patentansprüche

1. Suspo-Emulsion eines festen Pflanzenschutz-Wirkstoffes mit einem Schmelzpunkt von höher oder gleich 45 °C und einer Löslichkeit in Wasser bei 20 °C von unter 5 g/Liter, dadurch gekennzeichnet, daß sie fähig ist erhalten zu werden durch Mischen von:
   - einer wäßrigen Emulsion, die frei von Öl ist und mindestens Sucroglyceride umfaßt, mit
   - einer wäßrigen Suspension des genannten Wirkstoffes, die mindestens entweder ein nichtionisches und/oder anionisches oberflächenaktives Mittel oder ein oberflächenaktives System umfaßt, das seinerseits Sucroglyceride, alkoxyliertes Triglycerid und/oder alkoxylierte Fettsäure und/oder Sorbitan-Ester und/oder alkoxylierten Sorbitan-Ester umfaßt.

2. Suspo-Emulsion eines Wirkstoffes nach Anspruch 1, dadurch gekennzeichnet, daß sie fähig ist erhalten zu werden durch Mischen von:
   - einer wäßrigen Emulsion, die frei von Öl ist und mindestens Sucroglyceride umfaßt, mit
   - einer wäßrigen Suspension des genannten Wirkstoffes, die mindestens entweder ein nichtionisches und/oder anionisches oberflächenaktives Mittel oder ein oberflächenaktives System umfaßt, das seinerseits Sucroglyceride, alkoxyliertes Triglycerid und/oder alkoxylierte Fettsäure und/oder Sorbitan-Ester und/oder alkoxylierten Sorbitan-Ester und ein Netzmittel umfaßt.

3. Suspo-Emulsion eines Wirkscoffes nach Anspruch 1 oder 2, dadurch gekennzeichnet, daß die Sucroglyceride durch Umesterung von vorzugsweise naturlichen Triglyceriden mit Saccharose hergestellt werden.

4. Suspo-Emulsion nach Anspruch 3, dadurch gekennzeichnet, daß die natürlichen Triglyceride unter Schweineschnalz, Talg, Erdnußöl, Butteröl, Baumwollsamenöl, Leinöl, Olivenöl, Palmöl, Traubenkernöl, Fischöl, Sojaöl, Rizinusöl, Rapsöl, Kopraöl und Kokosnußöl ausgewählt werden.

5. Suspo-Emulsion nach einem der Ansprüche 1 bis 4, dadurch gekennzeichnet, daß die verwendeten Sucroglyceride von Palmöl, Schweineschmalz, Kopraöl, Talg, Rapsöl, Rizinusöl stammen.

6. Suspo-Emulsion nach einem der Ansprüche 1 bis 5, dadurch gekennzeichnet, daß die wäßrige Emulsion ein Phospholipid enthält, ausgewählt unter den rohen Lecithinen pflanzlichen oder tierischen Ursprungs, wie Lecithin von Soja, Lecithin von Eigelb sowie jeder Fraktion von Lecithin.

7. Suspo-Emulsion nach einem der Ansprüche 1 bis 6, dadurch gekennzeichnet, daß die wäßrige Emulsion im Verhältnis zum Gesamtvolumen der Emulsion in Gewicht umfaßt:
   - 0,1 % bis 60 % Sucroglyceride,
   - 0 % bis 50 % Phospholipide,
   - 0 % bis 20 % alkoxyliertes Triglycerid und/oder alkoxylierte Fettsäure und/oder Sorbitan-Ester und/oder alkoxylierten Sorbitan-Ester,
   - und die Ergänzung zu 100 % Wasser,

   und vorzugsweise:
   - 3 % bis 50 % Sucroglyceride,
   - 0 % bis 40 % Phospholipide,
   - 0 % bis 15 % alkoxyliertes Triglycerid und/oder alkoxylierte Fettsäure und/oder Sorbitan-Ester und/oder alkoxylierten Sorbitan-Ester,
   - und die Ergänzung zu 100 % Wasser.

8. Suspo-Emulsion nach einem der Ansprüche 1 bis 7, dadurch gekennzeichnet, daß die wäßrige Emulsion alkoxylierte Triglyceride und/oder alkoxylierte Fettsäuren und/oder Sorbitan-Ester und/oder alkoxylierte Sorbitan-Ester umfaßt, insbesondere ausgewählt unter den ethoxylierten Triglyceriden, den ethoxylierten Fettsäuren, den Sorbitan-Estern und den ethoxylierten Sorbitan-Estern.

9. Suspo-Emulsion nach Anspruch 8, dadurch gekennzeichnet, daß die ethoxylierten Triglyceride solche von pflanzlichem oder tierischem Ursprung sind, wie ethoxyliertes Schweineschmalz, Talg, Erdnußöl, Butteröl, Baumwollsamenöl, Leinöl, Olivenöl, Palmöl, Traubenkernöl, Fischöl, Sojaöl, Rizinusöl, Rapsöl, Kopraöl und Kokosnußöl.

**10.** Suspo-Emulsion nach Anspruch 8, dadurch gekennzeichnet, daß die ethoxylierten Fettsäuren Ester von Fettsäuren sind, wie ethoxylierte Oleinsäure oder Stearinsäure.

**11.** Suspo-Emulsion nach Anspruch 8, dadurch gekennzeichnet, daß die Sorbitan-Ester Ester von Sorbitol sind, cyclisiert von Fettsäuren mit 10 bis 20 Kohlenstoffatomen, wie Laurinsäure, Stearinsäure oder Oleinsäure.

**12.** Suspo-Emulsion nach einem der Ansprüche 1 bis 11, dadurch gekennzeichnet, daß der Pflanzenschutz-Wirkstoff unter
- Deltanethrin,
- Propham,
- Tetramethrin,
- Furalaxyl,
- Heptachlor,
- Propanil,
- Oxadiazon,
- Triflumizol,
- Dimethamethrin,
- Atrazin,
- Diuron,
- Neburon,
- Linuron,
- Isoproturon,
- Simazin,
- Amethryn,
- Phenmedipham
- Pendimethalin ausgewählt wird.

**13.** Suspo-Emulsion nach einem der Ansprüche 1 bis 12, dadurch gekennzeichnet, daß sie mehrere Pflanzenschutz-Wirkstoffe umfaßt.

**14.** Suspo-Emulsion nach einem der Ansprüche 1 bis 13, dadurch gekennzeichnet, daß die wäßrige Suspension des Wirkstoffes ein nichtionisches oberflächenaktives Mittel umfaßt, ausgewählt unter:
- den alkoxylierten Di-(1-phenyl-ethyl)-phenolen,
- den alkoxylierten Tri-(1-phenyl-ethyl)-phenolen,
- den alkoxylierten Alkylphenolen,
- den alkoxylierten Fettaminen,
- den alkoxylierten Fettalkoholen,
- den alkoxylierten Rizinusölen,
- den Sequenz-Polymeren Ethylenoxid-Propylenoxid (OE-OP) oder Ethylenoxid-Propylenoxid-Ethylenoxid (OE-OP-OE).

**15.** Suspo-Emulsion nach Anspruch 14, dadurch gekennzeichnet, daß die Alkoxy-Einheiten dieser oberflächenaktiven Mittel Oxyethylen- und/oder Oxypropylen-Einheiten sind, deren Anzahl von 2 bis 100 und vorzugsweise von 4 bis 50 variiert.

**16.** Suspo-Emulsion nach einem der Ansprüche 14 oder 15, dadurch gekennzeichnet, daß das nichtionische oberflächenaktive Mittel unter
- Di-(1-phenyl-ethyl)-phenol, ethoxyliert mit 15 Ethylenoxid-Einheiten (OE),
- Di-(1-phenyl-ethyl)-phenol, ethoxyliert mit 5 Einheiten OE,
- Di-(1-phenyl-ethyl)-phenol, ethoxyliert mit 10 Einheiten OE,
- Tri-(1-phenyl-echyl)-phenol, echoxyliert mit 16 Einheiten OE,
- Tri-(1-phenyl-ethyl)-phenol, ethoxyliert mit 20 Einheiten OE,
- Tri-(1-phenyl-ethyl)-phenol, ethoxyliert mit 25 Einheiten OE,
- Tri-(1-phenyl-ethyl)-phenol, ethoxyliert mit 40 Einheiten OE,
- Tri-(1-phenyl-ethyl)-phenole, ethoxy-propoxyliert mit 25 Einheiten OE + OP,
- den Nonylphenolen, ethoxy-propoxyliert mit 25 Einheiten OE + OP,
- den Nonylphenolen, ethoxy-propoxyliert mit 30 Einheiten OE + OP,

- den Nonylphenolen, ethoxy-propoxyliert mit 40 Einheiten OE + OP,
- den Nonylphenolen, ethoxy-propoxyliert mit 55 Einheiten OE + OP,
- den Nonylphenolen, ethoxy-propoxyliert mit 80 Einheiten OE + OP,
- den Trisequenz-Polymeren OE-OP-OE ausgewählt wird.

**17.** Suspo-Emulsion nach einem der Ansprüche 1 bis 13, dadurch gekennzeichnet, daß die wäßrige Suspension des Wirkstoffes ein anionisches oberflächenaktives Mittel umfaßt, ausgewählt unter:
- den Phosphorsäureestern von alkoxylierten Alkylphenolen, von alkoxylierten Di-(1-phenyl-ethyl)-phenolen, von alkoxylierten Tri-(1-phenyl-ethyl)-phenolen, von alkoxylierten Fettalkoholen,
- den Schwefelsäureestern von alkoxylierten Alkylphenolen, von alkoxylierten Di-(1-phenyl-ethyl)-phenolen, von alkoxylierten Tri-(1-phenyl-ethyl)-phenolen, von alkoxylierten Fettalkoholen,
- den Sulfonestern von alkoxylierten Alkylphenolen, von alkoxylierten Di-(1-phenyl-ethyl)-phenolen, von alkoxylierten Tri-(1-phenyl-ethyl)-phenolen,
- den Salzen von Polycarbonsäuren, den Homo- und Copolymeren von Polycarbonsäuren (wie den Polyacryl- und Polymethacrylsäuren), den Copolymeren auf der Basis von Maleinsäureanhydrid und Diisobutylen,
- den Alkylnaphthalin-sulfonaten, den Poly(alkylnaphthalin-sulfonaten),
- den Dihydroxydiphenyl-sulfonaten, kondensiert mit Formaldehyd.

**18.** Suspo-Emulsion nach Anspruch 17, dadurch gekennzeichnet, daß die Alkoxy-Einheiten dieses anionischen oberflächenaktiven Mittels Oxyethylen- und/oder Oxypropylen-Einheiten sind, deren Anzahl von 2 bis 100 und vorzugsweise von 4 bis 50 variiert.

**19.** Suspo-Emulsion nach einem der Ansprüche 17 oder 18, dadurch gekennzeichnet, daß das anionische oberflächenaktive Mittel ausgewählt wird unter:
- den Triethanolaminsalzen von Phosphorsäure-mono- und diestern von Tri-(1-phenyl-ethyl)-phenol, ethoxyliert mit 16 Einheiten OE,
- den Kaliumsalzen von Phosphorsäure-mono- und diestern von Tri-(1-phenyl-ethyl)-phenol, ethoxyliert mit 16 Einheiten OE,
- dem sauren Sulfat von Di-(1-phenyl-ethyl)-phenol, ethoxyliert mit 11 Einheiten OE,
- dem Kaliumsalz des Schwefelsäure-monoesters von Di-(1-phenyl-ethyl)-phenol, ethoxyliert mit 15 Einheiten OE,
- dem Triethanolaminsalz des Schwefelsäure-monoesters von Di-(1-phenyl-ethyl)-phenol, ethoxyliert mit 11 Einheiten OE,
- dem Ammoniumsalz des Schwefelsäure-monoesters von Tri-(1-phenyl-ethyl)-phenol, ethoxyliert mit 16 Einheiten OE,
- dem sauren Phosphat von Nonylphenol, ethoxyliert mit 9 Einheiten OE,
- dem Natrium-Methylnaphthalin-sulfonat,
- dem Natriumsalz der Polyacrylsäure.

**20.** Suspo-Emulsion nach einem der Ansprüche 1 bis 19, dadurch gekennzeichnet, daß die wäßrige Suspension des Wirkstoffes 0,1 Gew.-% bis 90 Gew.-% Wirkstoff im Verhältnis zum Gesamtvolumen der Suspension, und vorzugsweise 0,5 % bis 85 % (Gewicht/Volumen) umfaßt.

**21.** Suspo-Emulsion nach Anspruch 20, dadurch gekennzeichnet, daß die wäßrige Suspension des Wirkstoffes 0,2 Gew.-% bis 15 Gew.-% nichtionisches und/oder anionisches oberflächenaktives Mittel, und vorzugsweise 0,5 Gew.-% bis 10 Gew.-%, im Verhältnis zum Gesamtvolumen der Suspension umfaßt.

**22.** Suspo-Emulsion nach Anspruch 20, dadurch gekennzeichnet, daß die wäßrige Suspension des Wirkstoffes umfaßt:
- 0,1 Gew.-% bis 5 Gew.-% Sucroglyceride und Phospholipide, vorzugsweise 0,2 % bis 4 %,
- 0,1 Gew.-% bis 3 Gew.-% alkoxyliertes Triglycerid und/oder alkoxylierte Fettsäure und/oder Sorbitan-Ester und/oder alkoxylierten Sorbitan-Ester, wie vorstehend definiert, und vorzugsweise 0,2 % bis 2,8 %,
- 0,05 Gew.-% bis 1 Gew.-% eines Netzmittels, vorzugsweise 0,1 % bis 0,8 %,

im Verhältnis zum Gesamtvolumen der wäßrigen Suspension.

**23.** Suspo-Emulsion nach Anspruch 22, dadurch gekennzeichnet, daß das Netzmittel unter den anionischen Salzen der oberflächenaktiven Mittel, den alkoxylierten Alkoholen oder den alkoxylierten Alkylphenolen ausgewählt wird, dargestellt durch die folgenden Formeln:

$R_1$-$SO_3$-M
$R_2$-$SO_4$-M
$R_3$-$(OE)_n$-H
$R_3$-$(OP)_n$-H
$R_3$-$(OE\text{-}OP)_n$-H
$R_4$-COONa

worin

- $R_1$ darstellt
  - einen Alkylphenylrest,
  - einen Alkylrest,
  - einen Bis-1,2-(Octyloxycarbonyl)-ethyl-Rest,
- $R_2$ darstellt
  - einen Alkylrest,
  - einen ethoxylierten Alkylphenolrest,
  - einen ethoxylierten Alkylrest,
- $R_3$ darstellt
  - einen Alkylphenylrest,
  - einen Alkylnaphthylrest,
  - einen Alkylrest mit 8 bis 20 Kohlenstoffatomen, und vorzugsweise 10 bis 14 Kohlenstoffatomen,
- n eine Zahl von 4 bis 12 ist,
- OE die Oxyethyleneinheit und OP die Oxypropyleneinheit darstellt,
- $R_4$ einen Alkylrest mit 7 bis 23 Kohlenstoffatomen bedeutet,
- M Na, K, $NH_4$, ein Triethanolammonium-Kation, Diethanolammonium-Kation oder N-Methylcyclohexylammonium-Kation darstellt.

**24.** Suspo-Emulsion nach Anspruch 22, dadurch gekennzeichnet, daß das Netzmittel unter den oberflächenaktiven Mitteln auf der Basis von Silicon ausgewählt wird, wie den Copolymeren von Polydimethylsiloxan mit entweder den Ethylenglycol-Homopolymeren oder den Copolymeren von Ethylenglycol und Propylenglycol.

**25.** Suspo-Emulsion nach Anspruch 22, dadurch gekennzeichnet, daß das Netzmittel unter den fluorierten oberflächenaktiven Mitteln ausgewählt wird, wie den Verbindungen, die eine lineare, hydrophobe und oleophobe Perfluorkohlenstoff-Kette und einen hydrophilen Teil umfassen, der eine saure oder neutralisierte Sulfongruppe, eine Carboxylgruppe oder einen ethoxylierten Alkoholrest aufweist.

**26.** Suspo-Emulsion nach Anspruch 22, dadurch gekennzeichnet, daß in der wäßrigen Suspension des Wirkstoffes das Gewichtsverhältnis Sucroglyceride/Phospholipide 0 bis 3 beträgt.

**27.** Suspo-Emulsion nach einem der Ansprüche 1 bis 26, dadurch gekennzeichnet, daß die Verhältnisse von wäßriger Suspension und wäßriger Emulsion derart sind, daß die Suspo-Emulsion 0,1 Gew.-% bis 60 Gew.-% Wirkstoff im Verhältnis zu ihrem Gesamtvolumen enthält.

**28.** Suspo-Emulsion nach einem der Ansprüche 1 bis 27, dadurch gekennzeichnet, daß die Verhältnisse von Suspension und Emulsion derart sind, daß die Suspo-Emulsion 0,1 Gew.-% bis 12 Gew.-% nichtionisches und/oder anionisches oberflächenaktives Mittel im Verhältnis zu ihrem Gesamtvolumen enthält.

**29.** Suspo-Emulsion nach einem der Ansprüche 1 bis 28, dadurch gekennzeichnet, daß die Verhältnisse von Suspension und Emulsion derart sind, daß die Suspo-Emulsion 0,1 Gew.-% bis 60 Gew.-% Sucroglyceride im Verhältnis zu ihrem Gesamtvolumen enthält.

**30.** Suspo-Emulsion nach einem der Ansprüche 1 bis 29, dadurch gekennzeichnet, daS die Verhältnisse von Suspension und Emulsion derart sind, daS die Suspo-Emulsion 0 Gew.-% bis 50 Gew.-% Phospholipide im Verhältnis zu ihrem Gesamtvolumen enthält.

**31.** Suspo-Emulsion nach einem der Ansprüche 1 bis 30, dadurch gekennzeichnet, daß die Verhältnisse von Suspension und Emulsion derart sind, daS die Suspo-Emulsion 0 Gew.-% bis 20 Gew.-% alkoxyliertes Triglycerid und/oder alkoxylierte Fettsäure und/oder Sorbitan-Ester und/oder alkoxylierten Sorbitan-Ester im Verhältnis zu ihrem Gesamtvolumen enthält.

**32.** Suspo-Emulsion nach einem der Ansprüche 1 bis 31, dadurch gekennzeichnet, daß die Verhältnisse von Suspension und Emulsion derart sind, daß die Suspo-Emulsion 0,05 Gew.-% bis 0,7 Gew.-% Netzmittel im Verhältnis zu ihrem Gesamtvolumen enthält.

**33.** Verwendung der Suspo-Emulsionen nach einem der Ansprüche 1 bis 32, gegebenenfalls nach Verdünnung mit Wasser, für die Behandlung und den Schutz von Pflanzen.